# EUROPEAN PATENT APPLICATION

(11) **EP 3 945 477 A1**
(43) Date of publication of application: **02.02.2022**
(21) Application number: 21188024.0
(22) Date of filing: 27.07.2021
(51) Int. Cl.: G06Q 10/02, G06Q 10/06, G06Q 50/30

(54) **SYSTEMS AND METHODS FOR RIDESHARING WITH CONNECTED AND UNCONNECTED PASSENGERS**

(30) Priority: 27.07.2020 US 202063057100 P
(71) Applicant: VIA TRANSPORTATION, INC., New York, NY 10014 (US)
(72) Inventor: RAMOT, Daniel, New York, NY New York 10014 (US); SHOVAL, Oren, New York, NY New York 10014 (US); MARCOVITCH, Shmulik, New York, NY New York 10014 (US)
(74) Representative: Pearl Cohen Zedek Latzer Baratz UK LLP

(57) **Abstract**

A systems and methods for ridesharing are provided. The systems and method can include receiving a request for a ride share from a user and assigning a ride sharing vehicle based on a current number of unreserved reservable capacity spaces in a vehicle and a desired number of shared riders for a ride.

## Description

### CROSS REFERENCE TO RELATED APPLICATIONS

This application claims the benefit of and priority to U.S. Provisional Patent Application No. 63/057,100, filed July 27, 2020, the entire contents of which are owned by the assignee of the instant application and incorporated herein by reference in their entirety.

### FIELD OF THE INVENTION

The invention relates generally to vehicle ridesharing and systems and methods for ridesharing management.

### BACKGROUND OF THE INVENTION

Recent years have witnessed increasing interest and development in the field of vehicle sharing, where one or more riders may share the same vehicle for a portion of their rides. Ridesharing may save ride costs, increase vehicle utilization, and reduce air pollution. A rider may use a ridesharing service through a ridesharing service application accessed by the rider's mobile device.

### SUMMARY

Embodiments consistent with the present disclosure provide systems and methods for vehicle ridesharing and for managing a fleet of ridesharing vehicles. For example, consistent with the disclosed embodiments, the fleet of ridesharing vehicles may include more than 10 ridesharing vehicles, more than 100 ridesharing vehicles, or more than 1000 ridesharing vehicles that pick up multiple users and drop them off at locations proximate but other than their desired destinations.

In one aspect, the invention includes a system for managing a fleet of ridesharing vehicles. The system includes a communications interface configured to receive requests for shared rides from a plurality of users. The system at least one processor configured to receive, via the communications interface, a first request for a shared ride from a first user, the first request including information related to a first pick-up location of the first user, a first desired destination of the first user, and a desired number of shared riders, and assign a rideshare vehicle from a plurality of rideshare vehicles that can transport the first user to the first desired destination based a current number of unreserved reservable capacity spaces for the rideshare vehicle and the desired number of shared riders.

In some embodiments, the desired number of shared riders is based on input of the first user, input of the driver, received by the at least one processor or any combination thereof. In some embodiments, desired number of shared riders is a maximum number of shared riders. In some embodiments, the desired number of shared riders is a minimum number of shared riders.

In some embodiments, assigning the rideshare vehicle is further based on a desired number of shared riders of a current passenger in the rideshare vehicle. In some embodiments, assigning the rideshare vehicle is further based on a location the first user and the respective rideshare vehicle. In some embodiments, the first pick-up location is within a predefined distance of the first user.

In some embodiments, the at least one processor is further configured to transmit an estimated pick-up time and pick-up location to a communication device of the first user. In some embodiments, estimated pick-up time is based on traffic conditions. In some embodiments, the at least one processor is further configured to transmit a number of unoccupied unreserved capacity spaces of the ride sharing vehicle to a driver communication device of the ride sharing vehicle.

In another aspect, the invention involves a method for managing a fleet of ridesharing vehicles. The method involves receiving, by a communications interface, requests for shared rides from a plurality of users. The method also involves receiving, via the communications interface, a first request for a shared ride from a first user, the first request including information related to a first pick-up location of the first user, a first desired destination of the first user, and a desired number of shared riders. The method also involves assigning, via the communications interface, a rideshare vehicle from a plurality of rideshare vehicles that can transport the first user to the first desired destination based a current number of unreserved reservable capacity spaces for the rideshare vehicle and the desired number of shared riders.

In some embodiments, the method involves transmitting an estimated pick-up time and pick-up location to a communication device of the first user. In some embodiments, the method involves, comprising transmitting a number of unoccupied unreserved capacity spaces of the ride sharing vehicle to a driver communication device of the ride sharing vehicle.

Consistent with other disclosed embodiments, non-transitory computer-readable storage media may store program instructions, which are executed by at least one processing device and perform any of the methods described herein.

The foregoing general description and the following detailed description are exemplary and explanatory only and are not restrictive of the claims.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features and advantages thereof, can be understood by reference to the following detailed description when read with the accompanied drawings. Embodiments of the invention are illustrated by way of example and not limitation in the figures of the accompanying drawings, in which like reference numerals indicate corresponding, analogous or similar elements, and in which:
Fig. 1 is a diagram of a ridesharing management system, according to some embodiments of the invention.
Fig. 2 is a diagram of a mobile communications device associated with a ridesharing management system, according to some embodiments of the invention.
Fig. 3 is a diagram of an automated ridesharing dispatch system, including ridesharing management server associated with a ridesharing management system, according to some embodiments of the invention.
Figs. 4A and 4B are flowcharts of methods for vehicle ridesharing management, in accordance with some embodiments the invention.
Fig. 5 shows timing diagrams of ridesharing arrangements, according to some embodiments of the invention.
Fig. 6 is a flow diagram for a method of managing a fleet of ridesharing vehicles, according to some embodiments of the invention.

### DETAILED DESCRIPTION

In the following detailed description, numerous specific details are set forth in order to provide a thorough understanding of the invention. However, it will be understood by those skilled in the art that the present invention can be practiced without these specific details. In other instances, well-known methods, procedures, and components, modules, units and/or circuits have not been described in detail so as not to obscure the invention.

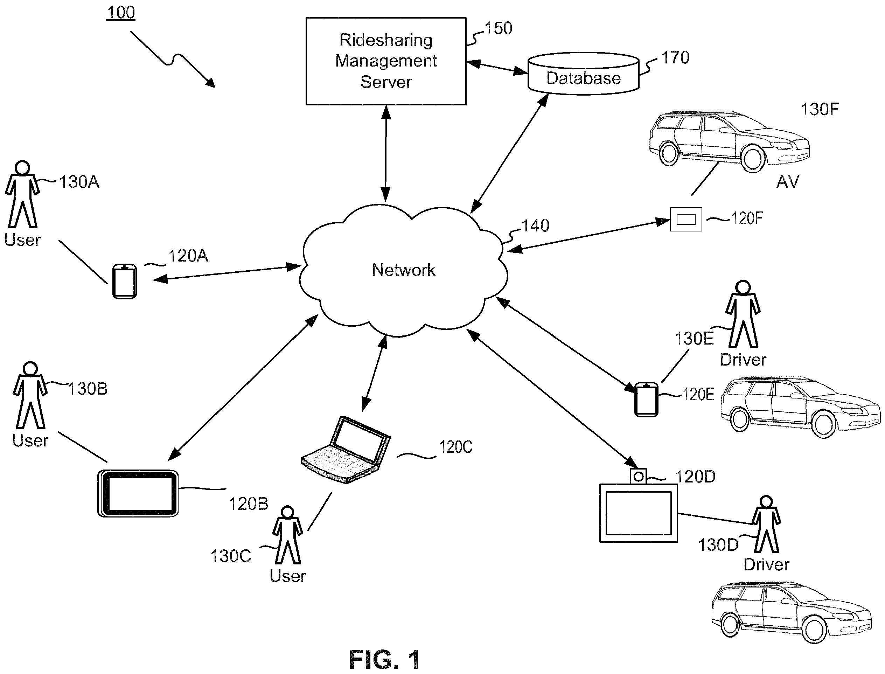

Fig. 1 is a diagram of a ridesharing management system 100, according to some embodiments of the invention. The ridesharing management system 100 includes one or more user devices 120A-120F (collectively referred to as user devices 120) associated with respective users 130A-130F, a network 140, a ridesharing management server 150, and a database 170. The user devices 120 can be mobile communications devices.

The users 130A-130F can be riders, drivers and/or other computing systems. In Fig. 1, users 130A-130C are riders, users 130D-130E are drivers, and user 130F is an autonomously driven vehicle user. The user devices 120A-120F can be associated with riders, drivers, and/or other computing systems, such that user devices 120A-120C can be referred to as rider devices, 120D-120E can be referred to as driver devices, and user device 120F can be referred to as a driving-control device.

The network 140 can be coupled to the user devices 120 to facilitate communications between the user devices 120 and the ridesharing management server 150. For example, the rider 130A can request a ride via the rider device 120A that is a smart phone. The request can be transmitted by the user device 120A to the ridesharing management server 150 through the network 140. The ridesharing management server 150 can transmit a route to the driver device 120E to instruct the driver 130E to pick-up the rider 130A. The ridesharing management server 150 can transmit a message to the rider 130A via the rider device 120A indicating that the driver 130E is on its way and the message can instruct the rider 130A to a particular pick-up location.

The network 140 can facilitate communications that include receiving ride requests and/or other ride related input from or sending confirmations to the rider devices 120A-120C and/or sending ride service assignments to the driver devices 120D-120E and driving-control device 120F.

The network 140 can be any type of network that provides communications, exchanges information, and/or facilitates the exchange of information between ridesharing management server 150 and user devices 120. For example, network 140 can be the Internet, a Local Area Network, a cellular network, a public switched telephone network ("PSTN"), and/or other suitable connection(s) that enables ridesharing management system 100 to send and/or receive information between the components of the ridesharing management system 100. The network 140 can be wired and/or wireless depending on the type of connection to the network 140. Although the network 140 is shown herein as a cloud, the network 140 can include a variety of computing components, including wired and wireless components that in various networked configurations to facilitate desired communication between components.

The network 140 can support a variety of messaging formats as is known in the art, and may support a variety of services and applications for user devices 120. For example, the network 140 can support navigation services for user devices 120, such as directing users and/or ridesharing service vehicles to pick-up and/or drop-off locations.

The ridesharing management server 150 can be a system that communicates with and/or is part of a communication service provider which provides a variety of data or services, such as voice, messaging, real-time audio/video, to users, such as users 130A-130E. The ridesharing management server 150 can be a computer-based system including computer system components, desktop computers, workstations, tablets, handheld mobile communications devices, memory devices, and/or internal network(s) connecting the components.

The ridesharing management server 150 can receive information from user devices 120 over the network 140, process the information, store the information, and/or transmit information to mobile communications devices 120 over network 140. The ridesharing management server 150 can receive ride requests from user devices 120A-120C. The ridesharing management server 150 can send ride confirmation and/or ride fare information to user devices 120A-120C. The ridesharing management server 150 can send ride service assignments (e.g., including pick-up and/or drop-off location information) to driver devices 120D and 120E, and driving-control device 120F.

The ridesharing management server 150 can receive user input from user devices 120A-120C. For example, the ridesharing management server 150 can receive various ride service parameters, such as walking distance to a pick-up location, maximum delay of arrival/detour, and/or maximum number of subsequent pick-ups.

The rideshare vehicle can be a car, van, SUV, truck, bus or any kind of vehicle suitable for human transportation. In some embodiments, a vehicle is a taxi. In some embodiments, a rideshare vehicle can be an autonomous vehicle, wherein a control device integrated with the vehicle or a management system separate from the vehicle can send operational messages.

The ridesharing management server 150 can calculate ride fares based on a solo portion of a user's ride and a shared portion of the ride. The ride fare calculation can be based on various ride service parameters set by the user, such as the walking distance involved in the ride, and/or user selection regarding toll road usage.

The database 170 may include one or more physical and/or virtual storages coupled with the ridesharing management server 150. The database 170 can store user account information (e.g., registered rider and/or driver accounts) and/or corresponding user profiles (e.g., contact information, profile photos, and/or associated mobile communications device information). User account information for a rider can include ride history, service feedback, complaints, and/or comments. User account information for a driver can include number of ride service assignments completed, ratings, and/or ride service history information. The database 170 can store various ride requests received from user devices 120A-120C. Each ride request can include a corresponding starting point and desired destination information, user input regarding various service parameters, pick-up and drop-off locations, time of pick-up and drop-off, ride fares, and/or other user feedback (e.g., user comments).

The database 170 may include traffic data, maps, and/or toll road information, which may be used for ridesharing service management. The traffic data may include historical traffic data and/or real-time traffic data regarding a certain geographical region. The traffic data may be used to determine traffic conditions. Traffic data and traffic conditions can be used to estimate pick-up and drop-off times for riders and/or determine an optimal route for a particular ride or for all rides. The real-time traffic data may be received from a real-time traffic monitoring system, which may be integrated into or independent from ridesharing management system 100.

The maps may include map information (e.g., roads, streets and/or distances) typically used for navigation purposes. The map information can be used to determine potential routes and in transit routes for the rideshare vehicles and/or guiding the users to a pick-off or drop-off location. Guiding the users to a pick-up or drop off location can include displaying a map, outputting audio, displaying a list of directions or any combination thereof. The in transit routes can be modified based on adding or reducing passengers, the driver driving off the route, speed and/or other updates. Toll road information may include amount of toll charges regarding certain roads, and any change or updates thereof. Toll road information may be used to calculate ride fares. In some embodiments, a rider can specify that the rideshare vehicle route avoids toll roads.

The data stored in database 170 can be transmitted to the ridesharing management server 150 for accommodating ride requests. In some embodiments, the database 170 is stored in a cloud-based server (not shown) that is accessible by the ridesharing management server 150 and/or user devices 120 through the network 140. In some embodiments, the database 170 reside within the ridesharing management server 150.

During operation, the ridesharing management server 150 can communicate with the driving-control device 120F to direct the autonomous vehicle 130F to pick up and drop off riders 130A-130C. In some embodiments, autonomous vehicles capable of detecting objects on the road and navigate to designated locations may be utilized for providing ridesharing services.

In various embodiments, the ridesharing management server 150 is implemented on a single server or on multiple servers. Each server can be on a single computing device or distributed among multiple computing devices. In various embodiments, the ridesharing management system 100 includes multiple ridesharing management servers, and each ridesharing management server can serve a category of ridesharing services, ridesharing services associated with a certain category of service vehicles, and/or ridesharing services in a specific geographical region. For example, a first ridesharing management server can direct a first fleet of vehicles, a second ridesharing management server can direct a second fleet of vehicles and a third ridesharing server can direct a third fleet of vehicles. The first, second and third fleet of vehicles can be on-demand services, fixed-route services, or any combination thereof.

In some embodiments, a plurality of ridesharing management servers collectively provides a dynamic and integrated ridesharing service system.

As shown in Fig. 1, users 130A-130E may include a plurality of users 130A-130C, and a plurality of drivers 130D and 130E, who may communicate with one another, and with ridesharing management server 150 using various types of user devices 120 that are mobile communications devices. For example, the mobile communications device can include a display such as a television, tablet, computer monitor, video conferencing console, or laptop computer screen. A mobile communications device 120 can further include video/audio input devices such as a microphone, video camera, keyboard and/or web camera. A mobile communications device 120 can include mobile devices such as a tablet or a smartphone having display and/or video/audio capture capabilities. The mobile communications device can include one or more software applications that can facilitate the mobile communications devices to engage in communications, such as IM, VoIP, video conferences. For example, user devices 130A-130C can send requests to ridesharing management server 150, and receive confirmations therefrom. Drivers 130D and 130E can use their respective user devices to receive ride service assignments and navigation information from ridesharing management server 150, and may contact the users with their respective user devices.

In some embodiments, a user may directly hail a vehicle by hand gesture or verbal communication, such as traditional street vehicle hailing. In such embodiments, once a driver accepts the request, the driver can use his respective user device to input the ride request information. Ridesharing management server 150 can receive the information, and accordingly assign one or more additional ride service assignments to the same vehicle, for example, subsequent ride requests received from other user devices 120 through network 140.

In some embodiments, driver devices 120D and 120E, and driving-control device 120F may be embodied in a vehicle control panel, as a part of the vehicle control system associated with a particular vehicle. For example, a traditional taxi company may install a drive device in all taxi vehicles managed by the taxi company. In some embodiments, driver devices 120D and 120E, and driving-control device 120F, may be further coupled with a payment device, such as a card reader installed as a part of the vehicle control panel or as a separate device associated with the vehicle. A user may then use the payment device as an alternative payment mechanism. For example, a user who hails the taxi on the street may pay through the payment device, without using a user device providing ridesharing service.

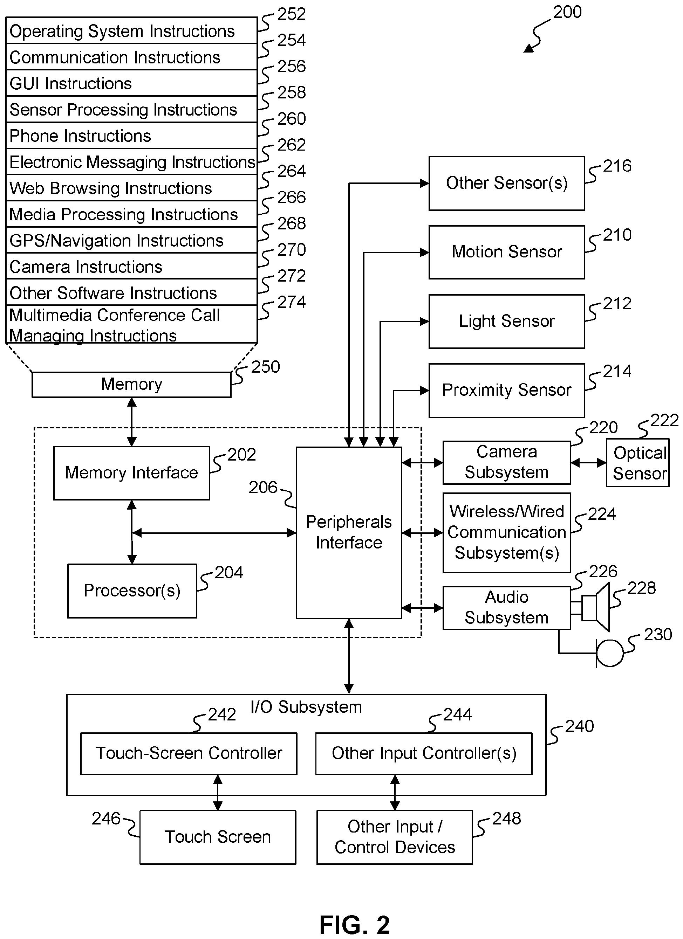

Fig. 2 is a diagram of a mobile communications device 200 (e.g., user device 120 100 as shown above in FIG. 1) associated with a ridesharing management system (e.g.. ridesharing management system 100 as shown above in FIG. 1), according to some embodiments of the invention. The mobile communications device 200 can be used to implement computer programs, applications, methods, processes, or other software to perform embodiments of the invention described in herein. For example, turning back to Fig. 1, rider devices 120A-120C, driver devices 120D and 120E, and driving-control device 120F may respectively be installed with a rider side ridesharing application, and a corresponding driver side ridesharing application.

Turning back to Fig. 2, the mobile communications device 200 can include a memory interface 202, one or more processors 204 such as data processors, image processors and/or central processing units, and/or a peripherals interface 206. The Memory interface 202, one or more processors 204, and/or peripherals interface 206 can be separate components or can be integrated in one or more integrated circuits. The various components in mobile communications device 200 may be coupled by one or more communication buses or signal lines.

Sensors, devices, and subsystems can be coupled to peripherals interface 206 to facilitate multiple functionalities. For example, a motion sensor 210, a light sensor 212, and a proximity sensor 214 may be coupled to peripherals interface 206 to facilitate orientation, lighting, and/or proximity functions. One or more sensors 216 can be connected to peripherals interface 206, such as a positioning system (e.g., GPS receiver), a temperature sensor, a biometric sensor, and/or other sensing devices. A GPS receiver can be integrated with, or connected to, mobile communications device 200. For example, a GPS receiver may be included in mobile telephones, such as smartphone devices. GPS software can allow mobile telephones to use an internal and/or external GPS receiver (e.g., connecting via a serial port or Bluetooth). A camera subsystem 220 and/or an optical sensor 222, e.g., a charged coupled device ("CCD") or a complementary metal-oxide semiconductor ("CMOS") optical sensor, can be used to facilitate camera functions, such as recording photographs and video clips.

Communication functions can be facilitated through one or more wireless/wired communication subsystems 224, which can include an Ethernet port, radio frequency receivers and transmitters and/or optical (e.g., infrared) receivers and/or transmitters. The specific design and implementation of wireless/wired communication subsystem 224 may depend on the communication network(s) over which mobile communications device 200 is intended to operate. For example, in some embodiments, mobile communications device 200 may include wireless/wired communication subsystems 224 designed to operate over a GSM network, a GPRS network, an EDGE network, a Wi-Fi or WiMax network, and a Bluetooth^{®} network.

An audio subsystem 226 may be coupled to a speaker 228 and a microphone 230 to facilitate voice-enabled functions, such as voice recognition, voice replication, digital recording, and/or telephony functions.

I/O subsystem 240 may include touch screen controller 242 and/or other input controller(s) 244. Touch screen controller 242 may be coupled to touch screen 246. Touch screen 246 and touch screen controller 242 may, for example, detect contact and movement or break thereof using any of a plurality of touch sensitivity technologies, including but not limited to capacitive, resistive, infrared, and surface acoustic wave technologies, as well as other proximity sensor arrays or other elements for determining one or more points of contact with touch screen 246. While touch screen 246 is shown in Fig. 2, I/O subsystem 240 may include a display screen (e.g., CRT or LCD) in place of touch screen 246.

Other input controller(s) 244 may be coupled to other input/control devices 248, such as one or more buttons, rocker switches, thumb-wheel, infrared port, USB port, and/or a pointer device such as a stylus. Touch screen 246 may, for example, also be used to implement virtual or soft buttons and/or a keyboard.

Memory interface 202 may be coupled to memory 250. Memory 250 includes high-speed random access memory and/or non-volatile memory, such as one or more magnetic disk storage devices, one or more optical storage devices, and/or flash memory (e.g., NAND, NOR). Memory 250 may store an operating system 252, such as DRAWIN, RTXC, LINUX, iOS, UNIX, OS X, WINDOWS, or an embedded operating system such as VXWorkS. Operating system 252 may include instructions for handling basic system services and for performing hardware dependent tasks. In some implementations, operating system 252 can be a kernel (e.g., UNIX kernel).

Memory 250 may also store communication instructions 254 to facilitate communicating with one or more additional devices, one or more computers and/or one or more servers. Memory 250 can include graphical user interface instructions 256 to facilitate graphic user interface processing; sensor processing instructions 258 to facilitate sensor-related processing and functions; phone instructions 260 to facilitate phone-related processes and functions; electronic messaging instructions 262 to facilitate electronic-messaging related processes and functions; web browsing instructions 264 to facilitate web browsing-related processes and functions; media processing instructions 266 to facilitate media processing-related processes and functions; GPS/navigation instructions 268 to facilitate GPS and navigation-related processes and instructions; camera instructions 270 to facilitate camera-related processes and functions; and/or other software instructions 272 to facilitate other processes and functions.

In some embodiments, communication instructions 254 may include software applications to facilitate connection with ridesharing management server (e.g., ridesharing management server 150 as described above in Fig. 1) that handles vehicle ridesharing requests. Graphical user interface instructions 256 may include a software program that facilitates a user associated with the mobile communications device to receive messages from ridesharing management server 150, provide user input, and so on. For example, a user may send ride requests and ride service parameters to a ridesharing management server and receive ridesharing proposals and confirmation messages. A driver may receive ride service assignments from ridesharing management server, and provide ride service status updates.

Each of the above identified instructions and applications may correspond to a set of instructions for performing one or more functions described above. These instructions need not be implemented as separate software programs, procedures, or modules. Memory 250 may include additional instructions or fewer instructions. Furthermore, various functions of mobile communications device 200 may be implemented in hardware and/or in software, including in one or more signal processing and/or application specific integrated circuits.

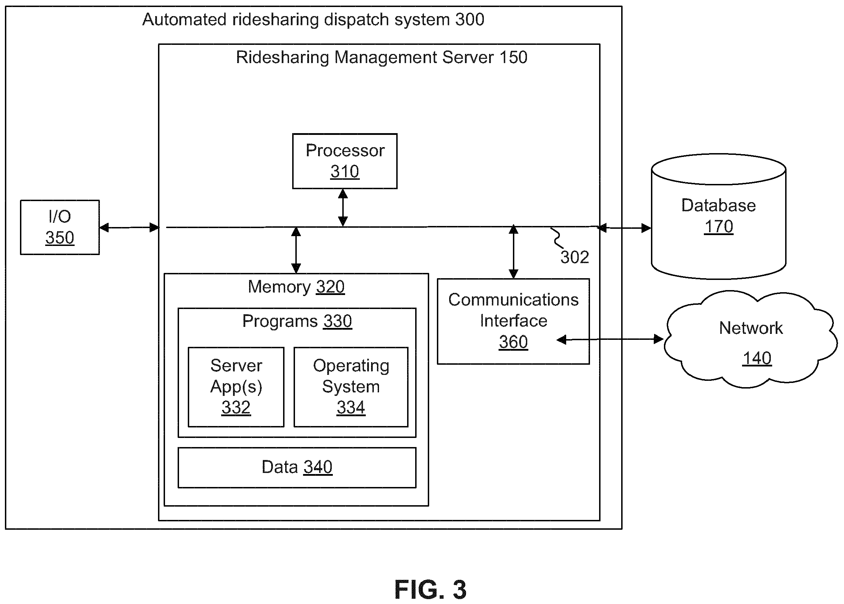

Fig. 3 is a diagram of an automated ridesharing dispatch system 300, including a ridesharing management server (e.g., ridesharing management server 150 as described above in Fig. 1) associated with a ridesharing management system (e.g., ridesharing management system 100 as described above in Fig. 1), according to some embodiments of the invention. The ridesharing management server 150 can include a bus 302 (or other communication mechanism), which interconnects subsystems and/or components for transferring information within the ridesharing management server 150.

As shown in Fig. 3, automated ridesharing dispatch system 300 may include one or more processors 310, one or more memories 320 storing programs 330 including, for example, server app(s) 332, operating system 334, and data 340, and a communications interface 360 (e.g., a modem, Ethernet card, or any other interface configured to exchange data with a network, such as network 140 in Fig. 1). Automated ridesharing dispatch system 300 can communicate with an external database (e.g., external databased 170 as described above with respect to Fig. 1). Automated ridesharing dispatch system 300 can include a single server (e.g., ridesharing management server 150) and/or can be configured as a distributed computer system including multiple servers, server farms, clouds, and/or computers that can interoperate to perform one or more of the processes and functionalities associated with embodiments.

The ridesharing management server 150 can be a computer platform that provides services via a network, such as the Internet, it can use virtual machines that may not correspond to individual hardware. The computational and/or storage capabilities can be implemented by allocating appropriate portions of desirable computation/storage power from a scalable repository, such as a data center and/or a distributed computing environment.

Processor 310 may be one or more processing devices configured to perform functions of the disclosed methods, such as a microprocessor manufactured by Intel^{™} or manufactured by AMD^{™}. Processor 310 can include a single core or multiple core processors executing parallel processes simultaneously. For example, processor 310 may be a single core processor with virtual processing technologies. In some embodiments, processor 310 can uses logical processors to simultaneously execute and/or control multiple processes. Processor 310 can implement virtual machine technologies, and/or other technologies to provide the ability to execute, control, run, manipulate, and/or store multiple software processes, applications, programs. In some embodiments, processor 310 includes a multiple-core processor arrangement (e.g., dual and/or quad core) to provide parallel processing functionalities to allow ridesharing management server 150 to execute multiple processes simultaneously. It is appreciated by one of ordinary skill in the art that other types of processor arrangements can be implemented that provide for the capabilities disclosed herein.

Memory 320 can be a volatile or non-volatile, magnetic, semiconductor, tape, optical, removable, non-removable, or other type of storage device or tangible or non-transitory computer-readable medium that stores one or more program(s) 330 such as server apps 332 and operating system 334, and data 340. Common forms of non-transitory media include, for example, a flash drive, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM or any other flash memory, NVRAM, a cache, a register, any other memory chip or cartridge, and networked versions of the same.

The ridesharing management server (e.g., ridesharing management server 150 as described above in Fig. 1) can include one or more storage devices configured to store information used by processor 310 (or other components) to perform certain functions related to the embodiments. For example, the ridesharing management server may include memory 320 that includes instructions to enable processor 310 to execute one or more applications, such as server apps 332, operating system 334, and/or any other type of application or software known to be available on computer systems. In some embodiments, the instructions, and/or application programs, can be stored in an external database 170 (which can also be internal to ridesharing management server 150) or external storage communicatively coupled with ridesharing management server 150 (not shown), such as one or more database or memory accessible over network 140.

Database 170 or other external storage may be a volatile or non-volatile, magnetic, semiconductor, tape, optical, removable, non-removable, or other type of storage device or tangible or non-transitory computer-readable medium. Memory 320 and database 170 may include one or more memory devices that store data and instructions used to perform one or more features of the disclosed embodiments. Memory 320 and database 170 may also include any combination of one or more databases controlled by memory controller devices (e.g., server(s), etc.) or software, such as document management systems, Microsoft SQL databases, SharePoint databases, Oracle^{™} databases, Sybase^{™} databases, or other relational databases.

In some embodiments, ridesharing management server 150 may be communicatively connected to one or more remote memory devices (e.g., remote databases (not shown)) through network 140 or a different network. The remote memory devices can be configured to store information that ridesharing management server 150 can access and/or manage. By way of example, the remote memory devices may include document management systems, Microsoft SQL database, SharePoint databases, Oracle^{™} databases, Sybase^{™} databases, or other relational databases. Systems and methods consistent with disclosed embodiments, however, are not limited to separate databases or even to the use of a database.

Programs 330 may include one or more software modules causing processor 310 to perform one or more functions of the disclosed embodiments. Moreover, processor 310 may execute one or more programs located remotely from one or more components of the ridesharing management system 100. For example, ridesharing management server 150 may access one or more remote programs that, when executed, perform functions related to disclosed embodiments.

In the presently described embodiment, server app(s) 332 may cause processor 310 to perform one or more functions of the disclosed methods. For example, devices associated with users, drivers and autonomous vehicles may respectively be installed with user applications for vehicle ridesharing services, and driver applications for vehicle ridesharing services. Further, a mobile communications device may be installed with both the driver applications and the user applications, for uses in corresponding situations.

In some embodiments, other components of ridesharing management system 100 may be configured to perform one or more functions of the disclosed methods. For example, mobile communications devices 120 may be configured to calculate estimate pick-up and drop-off times based on a certain ride request, and may be configured to calculate estimate ride fares. As another example, mobile communications devices 120 may further be configured to provide navigation service, and location service, such as directing the user to a particular pick-up or drop-off location, and providing information about a current location of the respective user or vehicle to ridesharing management server 150.

In some embodiments, program(s) 330 may include operating system 334 performing operating system functions when executed by one or more processors such as processor 310. By way of example, operating system 334 may include Microsoft Windows^{™}, Unix^{™}, Linux^{™}, Apple^{™} operating systems, Personal Digital Assistant (PDA) type operating systems, such as Apple iOS, Google Android, Blackberry OS, Microsoft CE^{™}, or other types of operating systems. Accordingly, the disclosed embodiments may operate and function with computer systems running any type of operating system 334. Ridesharing management server 150 may also include software that, when executed by a processor, provides communications with network 140 through communications interface 360 and/or a direct connection to one or more mobile communications devices 120. Specifically, communications interface 360 may be configured to receive ride requests (e.g., from user devices 120A -120C) headed to differing destinations, and receive indications of the current locations of the ridesharing vehicles (e.g., from driver devices 120D and 120E or driving-control device 120F). In one example, communications interface 360 may be configured to continuously or periodically receive current vehicle location data for the plurality of ridesharing vehicles that are part of ridesharing management system 100. The plurality of ridesharing vehicles can be a car fleet, bus fleet or any combination thereof. The current vehicle location data may include global positioning system (GPS) data generated by at least one GPS component of a mobile communications device 120 associated with each ridesharing vehicle.

In some embodiments, data 340 may include, for example, profiles of users, such as user profiles or driver profiles. User profiles can include contact information, profile photos, user account information and/or associated mobile communications device information. Rider account information can include ride history, service feedbacks, complaints, and/or comments. Driver account information can include number of ride service assignments completed, ratings, ride service history, rider ride history, driver service record, and/or communications between a driver and a rider regarding a particular ride request. In some embodiments, data 340 may further include traffic data, toll road information, and navigation information, which may be used for handling and accommodating ride requests.

Automated ridesharing dispatch system 300 may also include one or more I/O devices 350 having one or more interfaces for receiving signals or input from devices and providing signals or output to one or more devices that allow data to be received and/or transmitted by automated ridesharing dispatch system 300. For example, automated ridesharing dispatch system 300 may include interface components for interfacing with one or more input devices, such as one or more keyboards, mouse devices, and the like, that enable automated ridesharing dispatch system 300 to receive input from an operator or administrator (not shown).

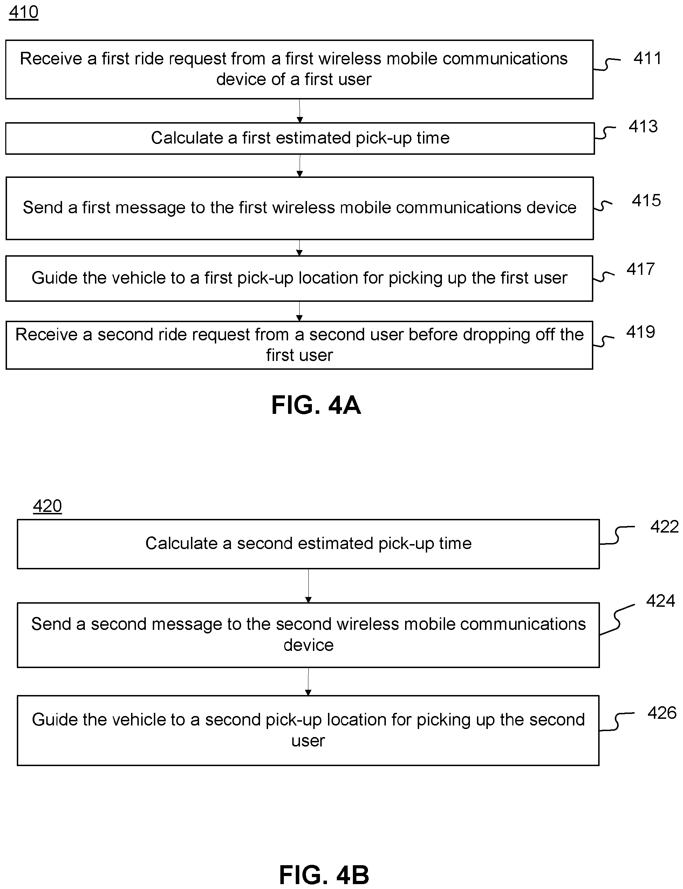

Figs. 4A and 4B are flowcharts 410 and 420 of methods for vehicle ridesharing management, in accordance with some embodiments the invention.

Turning to Fig. 4A, the method involves receiving (e.g., by ridesharing management server 150 as described above in Fig. 1) a first ride share requires from a first wireless mobile communications device (e.g., user device 120 as described above in Fig. 1) of a first user (Step 411). For example, a request from user 130A sent through user device 120A, as described above in Fig. 1.

The first ride request can be a request from the first user requesting transportation service from one location to another location. The first ride request can include a first starting point and a first desired destination.

The starting point can be a current location of the user or a different location that the user expects to subsequently arrive at (e.g., an entrance of a building). The starting point can be input manually by the user through the user's device and/or determined automatically by a location service application installed on the user device.

The first desired destination can be a location where the user is requesting to be taken to.

A pick-up location and a drop-off location can be determined (e.g., can be determined by the ridesharing management server 150 as described above in Fig. 1). The pick-up location and the drop-off location can be the same as (or substantially the same as) or different than the starting point and the first desired destination, respectively. The pick-up location for the rider can be set to be the starting point. The drop-off location can be set to be the first desired destination.

In some embodiments, the pick-up location can be a distance from the starting point, where the user may be directed to for pick-up. In some embodiments, the drop-off location can be a distance from the first desired destination. The distance can be input by the user (e.g., the user rider or driver can set a maximum distance), determined by the ridesharing management server (e.g., based on surrounding area and/or input by an admin), or any combination thereof, as discussed in further detail below. The distance between the pick-up location and starting point, and the distance between the drop-off location and the first desired destination can be the same or different. The pick-up location can be based on one passenger departure. For example, a vehicle ridesharing service management system may project (e.g., using a combination of historical data, real-time reservation data from a user communication device, data from a driver communication device, and/or sensor data) that at least one passenger (e.g., a reservation passenger, non-reservation passenger) will depart from a ridesharing vehicle when the ridesharing vehicle arrives at a particular location (e.g., a bus stop). Based on this projection, the vehicle ridesharing service management system may select the projected location as a designated pick-up location for a user (e.g., a user requesting an assignment) and direct the user to that location (e.g., by sending a notification to a user communication device associated with the user).

In various embodiments, the user can be encouraged to walk the distance for pick-up, drop-off or both. In some embodiments, the vehicle ridesharing service management system provides incentives and/or rewards for users who are willing to walk a distance. The incentives/rewards can be based on a length of the distance and/or a number of distances walked (e.g., distances of the walks involved in a particular ride, cumulative distances over the course of time, number of distances walked in one trip, number of distances walked over multiple trips). In some embodiments, the ridesharing management offers ride credits corresponding to the number and distance of the walks undertaken by the user during his rides. The user can use the credits for subsequent ride payment, redeem the credits for money, free rides, and/or other rewards.

Having a user walk the distance can provide advantages for the ridesharing vehicle. For example, a distanced pick-up/drop-off location can allow the vehicle to more easily and/or quickly locate the user without an excessive detour or avoid excessive delays for other riders who are in the vehicle. In another example, a distanced pick-up/drop-off location can allow a vehicle to accommodate subsequent pick-ups and/or arrive at subsequent pick-up locations more quickly. Additional examples can include more efficient vehicle use and management, more user flexibility, and/or less air pollution associated with vehicle use due to, for example, shorter trips.

In some embodiments, prior to or after the user sends a ride request, the user can input ride service parameters through a settings component provided on a user interface. Ride service parameters can include a maximum walking distance from the starting point to a pick-up location, a maximum walking distance from a drop-off location to a desired destination, a total maximum walking distance involved in a ride, a maximum number of subsequent pick-ups, maximum delay of arrival/detour incurred by subsequent pick-ups during a ride, and/or a selection whether to permit toll road usage during the ride.

The ride service parameters can be transmitted to ridesharing management server for processing the request and assignment of an available vehicle based on the ride service parameters. For example, a ride request may be associated with a maximum walking distance of 300 meters from a starting point to a pick-up location. When assigning an available vehicle to pick up the user, ridesharing management server can include in the assignment an assigned pick-up location within 300 meters or less of the starting point. A ride request can be associated with a maximum walking distance of 0.5 mile from a drop-off location to a desired destination. When assigning an available vehicle to pick up the user, ridesharing management server 150 may include in the assignment an assigned drop-off location within 0.5 mile or less from the desired destination.

For requests associated with a maximum total walking distance of one mile during the ride, when assigning an available vehicle to pick up the user, ridesharing management server 150 may include in the assignment an assigned pick-up location and an assigned drop-off location, a total of a distance from the starting point to the assigned pick-up location and a distance from the assigned drop-off location to a desired destination may be equal to or less than one mile.

In the above examples, the values regarding the walking distances are only exemplary. The distances can be measured in units of miles, meters, kilometers, blocks, and/or feet. In some embodiments, the distance can be represented by an average walking time from a certain location to another, based on average walking speed, for example, ten minutes, five minutes, etc.

With respect to parameters regarding subsequent pick-ups, such as a maximum number of subsequent pick-ups, and maximum delay of arrival incurred by subsequent pick-ups, ridesharing management server can assign subsequent pick-ups accordingly, without exceeding the parameters set by the user. For example, a ride request may be associated with a maximum number of two subsequent pick-ups during the ride. Ridesharing management server can monitor a service status of the vehicle assigned to pick up the user, and refrain from assigning a third subsequent pick-up before the vehicle arrives at the a drop-off location for dropping off the user. In another example, for a ride request associated with a maximum delay of arrival of ten minutes, when assigning subsequent ride requests, ridesharing management server 150 may calculate an estimated delay that may occur to the user if the same vehicle was to undertake the subsequent ride request. If the estimated delay that may occur to the user is more than ten minutes, ridesharing management server 150 may assign the subsequent ride request to other available vehicles.

In some embodiments, the user may also input selection of toll road usage through the associated user device, to allow or disallow use of toll roads. Ridesharing management server can take the user's selection into account when assigning an available vehicle for accommodating the ride request, determining travel route, and calculating ride fare for the user. For example, ridesharing management server 150 may adjust the ride fare amount for a corresponding user based on the toll roads selection input and toll charges involved. For another example, if a first user does not permit toll road usage, before any subsequent pick-ups during the ride, ridesharing management server 150 may send a route to an assigned vehicle that does not include toll roads. In another example, if a subsequent user sharing the ride permits usage of toll road, ridesharing management server 150 may not charge the first user for any overlap portion of the ride where toll roads are used, change the route to include toll roads after the first user is dropped off, or assign the second user to a ridesharing vehicle with users that permit toll road usage.

In some embodiments, the ride request information may also be input from the driver device, for example, driver device 120D, or from a device associated with the vehicle. In the case of street hailing, where the user hails a vehicle on the street without using a vehicle ridesharing service application on a mobile communications device, the driver, for example, driver 130D, may input information such as the starting point/pick-up information and destination information through driver device 120D, which may then be transmitted to ridesharing management server 150.

The method can also involve calculating (e.g., by ridesharing management server 150 as described above in Fig. 1) an estimated pick-up time for the first rider (Step 413). The estimated pick-up time can be based on a current location of the assigned vehicle and the pick-up location of the rider included in the first ride request. The estimated pick-up time can be a time period before an assigned vehicle arrives at the pick-up location for picking up the user.

The assigned vehicle can be the vehicle that is assigned to undertake the first ride request, for example, a taxi in a taxi fleet, one of a plurality of vehicles managed by a transportation service system, or a plurality of vehicles owned by a plurality of owners and used to provide ridesharing services.

The estimated pick-up time may be determined based on a distance between a current location of the assigned vehicle and the pick-up location, and an estimate speed of traveling along the route between the two locations. The current location of the assigned vehicle can be determined by a location service application installed on a driver device, a driving-control device, and/or by a location determination component in the ridesharing management system (e.g., ridesharing management system 100 as described above in Fig. 1. In some embodiments, the estimated pick-up time may further be determined based on historical or real-time traffic data, and/or a route currently followed by the vehicle.

In some embodiments, process 410 may further include locating one or a plurality of potential available vehicles, and selecting an assigned vehicle therefrom. For example, potential available vehicles may include vacant vehicles from a fleet of rideshare vehicles in the surrounding areas of the first pick-up point, and vehicles heading to a location close to the first pick-up point for assigned pick-ups or drop-offs. The ridesharing management server can filter potential available vehicles by ride service parameters set by the users who are inside the vehicle, for example, removing occupied vehicles where a user inside the vehicle does not permit subsequent pick-ups, or occupied vehicles where the user requires a minimal delay. In some embodiments, the ridesharing management server filters potentially available vehicles by choosing a vehicle that causes minimal walking of the user, or walking of the user that refrains from requiring the user to cross the street. In some embodiments, the ridesharing management server can filter potential assignment vehicles by choosing a vehicle that takes minimal detours for the vehicle to arrive at the pick-up location. In some embodiments, the potentially available vehicle may be selected by applying multiple filter criteria, or by applying multiple filter criteria in a certain order.

In some embodiments, the ridesharing management server adjusts the selection of the pick-up location based on filtering results of potential assignment vehicles, or vice versa. The two selection processes can complement each other to reach one or more optimal combinations. In various embodiments, the ridesharing management server assigns a pick-up location that is along a main street that an assigned vehicle can easily locate and/or at a location which that does not require an assign vehicle to take a U-turn. In cases where there are one or more other users in the vehicle, the ridesharing management server 150 can assign a pick-up location close to the vehicle's next assigned drop-off and/or on a side of a street that the vehicle has to ride through for routes for riders already in the vehicles.

In some embodiments, where there are multiple potential assignment vehicles, each with a corresponding potential pick-up location, an estimated pick-up time can be respectively calculated corresponding to each of the potential assignment vehicles. In some embodiments, the ridesharing management server chooses the vehicle with the shortest estimated pick-up time as the assigned vehicle.

The method also involves sending (e.g., via ridesharing management server 150 as described above in Fig. 1) a first message to a user device (e.g., user device 120A as described above in Fig. 1) associated with the first user. The first message can cause an indication of the calculated first estimated pick-up time to appear on a display of the user's device. The message can appear as a text message including the estimated pick-up time, as an audio message, and/or an image.

In some embodiments, the message includes a confirmation that the ridesharing request is accepted. If the ridesharing management server assigns a pick-up location that is different from the starting point, the message can cause an indication of the assigned pick-up location to be presented to the user. The ridesharing management server can provide a navigation option which can displayed on a user interface.

A selection of the navigation option can provide walking directions the user to the pick-up location for pick-up. The message can cause a display of an indication of an estimated walking distance from the starting point to the assigned pick-up location. The message can include an estimated walking distance from the assigned drop-off location to the desired destination. The assigned drop-off location can be a location within the maximum walking distance parameters set by the first user. For example, the drop-off location can be at a location a half a block away or further from the desired destination, and can be along a main street where the vehicle may easily locate and access. In another example, the drop-off location can be determined based on a route that is headed towards a next pick-up location, such that the vehicle can easily drop off the first user on its way to the next pick-up location, thereby avoiding an extra detour.

In another embodiment, the message may include one or more proposals associated with different vehicles. Each proposal may include information about the proposed pick-up location. The information about the proposed pick-up location can include the distance from the user to the proposed pick-up location. Each proposal may include a price of the ride associated, type of the ride (e.g., single vs. shared, SUV vs. sedan), and an estimation of a pick-up time. The estimate may be presented as a range. For example, each proposal can include a unique combination of pick-up locations, price, and/or estimations of a pick-up time.

In some embodiments, step 415 can also include receiving a proposal selection (e.g., one selection of multiple options that is presented to a rider) reflective of a selected pick-up vehicle and sending an addition message that includes information about the selected vehicle, and the driver associated with the vehicle. For example, the vehicle information may include the license plate number, brand, color, and/or model of the vehicle. The driver information can include a name, nickname, profile photo, ratings, number of previous rides, and/or contact information of the driver. The message can include a contact option allowing the user to contact the driver, for example, a "contact the driver" button, which the user can select to initiate a communication session with the driver.

The method can also involve guiding (e.g., via the ridesharing management server 150 as described above in Fig. 1), the assigned vehicle to the pick-up location to pick up the first user. For example, ridesharing management server can transmit a route (e.g., route shaped on a map) direction information and/or navigation instructions to the driver device associated with the assigned vehicle, for example, driver device 120D or driving-control device 120F as described above in Fig. 1. In some embodiments, a navigation component of the driver device, or the driving-control device performs the step of guiding the vehicle to the first pick-up location. The ridesharing management server 150, or a navigation component of the user device (e.g., user device 120A as described above in Fig. 1), can guide the user to the first pick-up location, in cases where the pick-up location is at a location that is different from the starting point. For example, for autonomous vehicles used for ridesharing services, such as autonomous vehicle 130F as shown in Fig. 1, the vehicle itself may be capable of using a variety of techniques to detect its surroundings, identify feasible paths, and navigate without direct human input.

In some embodiments, once the vehicle is assigned to pick up the user, ridesharing management server assigns a communication channel for the driver associated with the assigned vehicle to communicate with the user, for example, a masked phone number. In some embodiments, a user interface of a driver device includes an option to send notification messages to the user, for example, a pre-defined message button of "I'm here." Once the vehicle arrives at the pick-up location, the driver can click the message button to send the message to the user. This way, the driver may not need to dial out or type a message in order to notify the user of the vehicle's arrival, e.g., reducing driver distraction and associated safety hazards.

The method can also involve receiving (e.g., via a ridesharing management server 150 as described above in Fig. 1) a second ride request from a second user via a second user device. The second ride request can be received by ridesharing management server from a second wireless mobile communications device, for example, user device 120B associated with user 130B as shown in Fig. 1. The second ride request can include a second starting point, and a second desired destination. Ridesharing management server can assign a corresponding vehicle from a fleet of ridesharing vehicles, which may be the vehicle that has picked up the first user, before dropping off the first user. In processing the second ride request, the example process 420 as shown in Fig. 4B may be performed.

In some embodiments, the second user's request is a street hailing request received directly by the assigned vehicle while the first user is still inside, namely, before dropping off the first user. The vehicle can undertake the second ride request, if the first user's ride service parameters set by the first user permits subsequent pick-ups. In some embodiments, the driver of the vehicle may input the second ride request information through a driver device, for example, driver device 120D associated with driver 130D. The input can inform the ridesharing management server that the rideshare vehicle has undertaken a second ride request, and/or can include the pick-up location and destination information of the second user. The ridesharing management server 150 can determine whether to assign additional pick-ups to the same rideshare vehicle, and can send direction information guiding the rideshare vehicle to the second user's destination.

Turning to Fig. 4B, Fig. 4B show a method for a ridesharing management server to instruct the ride sharing vehicle of Fig. 4A to pick-up a second user, according to some embodiments of the invention. The method can involve calculating (e.g., via the ridesharing management server 150 as described above in Fig. 1) a second estimated pick-up time based on a second current location of the vehicle and the second starting point (Step 422). The second estimated pick-up time can be an estimated time period before the rideshare vehicle arrives at a second pick-up location for picking up the second user. The second pick-up location can be an assigned pick-up location different from, but associated with, the second starting point. Assignment of the second pick-up location can include similar steps as described above with reference to Fig. 4A in assigning the first pick-up location, details of which are not repeated herein.

The method can also involve sending (e.g., via the ridesharing management server 150 as described above in Fig. 1) a second message to the second wireless mobile communication device (e.g., the user device 120B as described above in Fig. 1). The second message can cause an indication of the calculated second estimated pick-up time to appear on a display of the second wireless mobile communication device. As described above with reference to Fig. 4A, the message can appear on the display of the second user's device with various proposal and options, the details of which are not repeated herein.

In some embodiments, where the first user has not been picked up yet, the ridesharing management server sets the second pick-up location at substantially the same location as the first pick-up location, for example, half a block away, or 100 meters away from the first pick-up location. This way, the vehicle may pick up both users at about the same time at substantially the same location, to, for example, improve service efficiency. In some embodiments, the ridesharing management server sets the second pick-up location at a substantially the same location as the first drop-off location, wherein the vehicle may drop off the first user, and pick up the second user at about the same time, without substantial extra travelling. In some embodiments, the second drop-off location is set at substantially the same location as the first drop off location, such that the vehicle may drop off multiple users at the same time (or substantially the same time).

In some embodiments, the ridesharing management server sets the first pick-up location to substantially differ from the first starting point, and the second pick-up location to substantially differ from the second starting point to, for example, ensure both pick-up locations are along the same side of the same street that the vehicle travels along. The ridesharing management server can send respective directions to the first user device and the second user device, to guide the users to the respective pick-up locations.

In some embodiments, the ridesharing management server sets the first pick-up location at substantially the same as the first starting point, and set the second pick-up location to substantially differ from the second starting point. For example, the pick-up locations can be set such that the first pick-up location and the second pick-up location are close to one another, both pick-up locations are along the same street, or the second pick-up location is close to the first drop-off location. The ridesharing management server can send respective directions to the first user device and the second user device to, for example, guide the users to the respective pick-up locations.

The method can also involve guiding (e.g., via the ridesharing management server 150 as described above in Fig. 1) the vehicle to a second pick-up location for picking up the second user. As described above with reference to Fig. 4A, this step may also be performed by a navigation component of the driver's device (e.g., driver device 120D or driving-control device 120F associated with autonomous vehicle 130F).

In some embodiments, the ridesharing management server changes the first drop-off location after receiving the second ride request, and the change may be made without pre-approval of the first user. The first drop-off location refers to a location for dropping off the first user. As described above with reference to Fig. 4A, the first drop-off location may be the same as the first desired destination, or at a location different from the first desired destination.

For example, the second pick-up location may be set at a location close to the first desired destination, included in the first ride request. When assigning the second ride request to the vehicle, the ridesharing management server can change the first drop-off location to a location closer to or at the first desired destination, thus reducing the walking distance for the first user to arrive at his desired destination. For another example, the first drop-off location may be changed to a location where the first user does not need to cross the street to arrive at his desired destination, without causing or increasing detour for the vehicle to arrive at the second pick-up location.

In some embodiments, the ridesharing management system can receive a plurality of subsequent ride requests. These additional ride requests can be received by the ridesharing management server and assigned to one or more vehicles of the fleet of ridesharing vehicles, or received by the vehicles in the form of street hailing. Steps described above with reference to Figs. 4A and 4B may similarly be used to process the third ride request.

For example, the ridesharing management server (e.g., the ridesharing management server 150 as described above in Fig. 1) can receive a third ride request from a third user device, for example, user device 120C associated with user 130C, as shown in Fig. 1. The ridesharing management server can process the request and assign the request to the rideshare vehicle while the first user and/or the second user is still in the vehicle. The third ride request can include a third starting point and/or a third desired destination. The ridesharing management server can calculate a third estimated pick-up time, and send a confirmation to a user's device. The ridesharing management server can transmit navigation instructions and/or route information to the driver's device associated with the vehicle (e.g., driver device 120D as shown in Fig. 1), to guide the vehicle to pick up and drop off user 130C.

As described above with reference to Figs. 4A and 4B, processing of subsequent ride requests may take into account of the ride service parameters set by the users whose requests have previously been received and assigned. For example, if both the first user and the second user are still in the vehicle, and one of them has set a maximum delay of arrival, ridesharing management server 150 may not assign the third request to the same vehicle if such assignment causes a delay longer than the set value. For example, if the first user has set a maximum delay of arrival of 10 minutes, ridesharing management server 150 may calculate an estimated time period it takes for the vehicle to pick up (and/or drop off) the third user before dropping off the first user. If the estimated time causes a total delay of arrival for the first user to exceed 10 minutes, ridesharing management server 150 may therefore assign the third ride request to another vehicle. For another example, if the second user has set a maximum number of one co-rider and the second user will be dropped off earlier than the first user, ridesharing management server 150 may not assign to the same vehicle, as such assignment may cause violation of the parameter (maximum number of one co-rider) set by the second user.

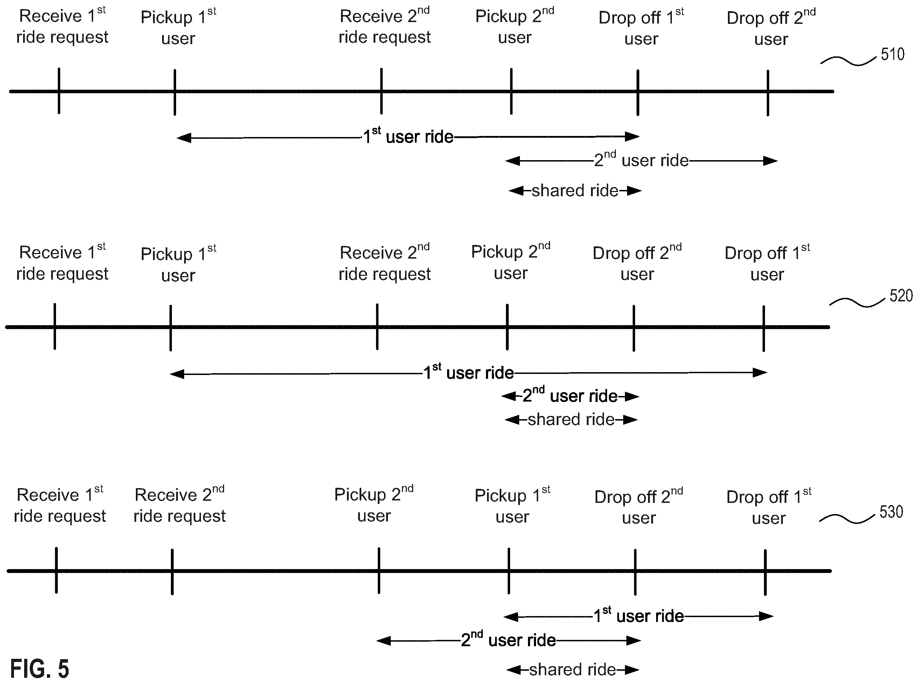

Fig. 5 shows timing diagrams of ridesharing arrangements, according to some embodiments of the invention. Timelines 510, 520, and 530 show an example of order of pick-up and drop-off varying for a second user of a rideshare vehicle undertaking a first ride request from a first user and a second ride request from a second user. For example, the ridesharing management server can receive a plurality of ride requests, design an optimal path and/or pick-up/drop-off order for a particular assigned vehicle undertaking multiple requests, and assign additional pick-ups as the vehicle completes a part of or all of the ride requests. As shown in example timeline 510, the rideshare vehicle receives a second ride request after picking up the first user, and drops off the first user before dropping off the second user. A corresponding shared ride portion can be the portion of ride between the pick-up of the second user and drop-off of the first user. As shown in timeline 520, the rideshare vehicle may receive a second ride request after picking up the first user, and drop off the second user before dropping off the first user. A corresponding shared ride portion may be the portion of ride between the pick-up of the second user and drop-off the second user. As another example, as shown in example timeline 530, the rideshare vehicle may receive the first ride request and the second ride request before any pick-up. The vehicle may then pick up the second user before picking up the first user, and drop off the second user before dropping off the first user. A corresponding shared ride portion may be the portion of ride between pick-up of the first user and drop-off of the second user. Depending on the order of pick-ups and drop-offs, the ridesharing management server may then determine a corresponding shared ride portion, and calculate ride fare for each user based on, for example, the shared portion, solo portion of each user, and/or other factors such as the ride service parameters set by each user.

In some embodiments, the ridesharing management server may determine a number of unreserved reservable capacity spaces of a first ridesharing vehicle. For example, ridesharing management server may access reservation information generated in response to any number of user requests for a space on a ridesharing vehicle (e.g., users who have been assigned to a ridesharing vehicle, including the first ridesharing vehicle). In some embodiments, ridesharing management server 150 determines a number of unreserved reservable capacity spaces of a second ridesharing vehicle, or any number of ridesharing vehicles.

A reservable capacity space may be a space on a ridesharing vehicle (e.g., a bus) that is designated only for passengers who request a ride from the vehicle using a user communication device, specific application, or who otherwise request a ride other than by entering the vehicle at a regularly scheduled pick-up location (e.g., a bus stop). A reservable capacity space may be considered reserved when a user has requested a pick-up from a ridesharing vehicle and is currently assigned to a space within the vehicle. Similarly, a ridesharing vehicle may also have a number of unreservable capacity spaces. An unreservable capacity space may be a space on a ridesharing vehicle (e.g., a bus) that is designated only for passengers who enter the vehicle without having previously requested a pick-up (e.g., at a regularly scheduled pick-up location, such as a bus stop. A user associated with a reservable capacity space (e.g., a user who has been assigned to a reservable capacity space) may be considered a reservation passenger.

A ridesharing vehicle may have an associated number of reservable capacity spaces and unreservable capacity spaces. In some embodiments, a number of reservable capacity spaces and/or unreservable capacity spaces may be set by a driver communication device, a ridesharing management server, and/or a fleet management device. In some embodiments, a number of reservable capacity spaces and/or unreservable capacity spaces may be based on at least one characteristic of a ridesharing vehicle (e.g., a combination of: space dimensions, a weight constraint, a number of seats in the vehicle, and/or a number of handholds in the vehicle). A user associated with a unreservable capacity space (e.g., a user who has entered a ridesharing vehicle but has not been assigned to a reservable capacity space) may be considered a non-reservation passenger.

As a ride sharing vehicle (e.g., a bus) travels along a route, updates may be made to numbers of reservable and/or unreservable capacity spaces that are reserved, unreserved, occupied, and/or unoccupied. By way of example, an empty bus may have 40 unreservable capacity spaces and 10 reservable capacity spaces. Continuing the example, at a bus stop, 20 passengers who did not send a ride request may enter the bus, and ridesharing management server 150 may have assigned three passengers who did send a ride request (e.g., by using a user communications device) to the bus. At this point, the bus may be deemed to have 20 occupied unreservable capacity spaces, 20 unoccupied unreservable capacity spaces, three reserved reservable spaces, and seven unreserved reservable spaces.

In some embodiments, a ridesharing vehicle may maintain a number of reservable capacity spaces related to (e.g., correlated with) a number of ride assignments. In this manner, a ridesharing vehicle may have a dynamic number of reservable and/or unreservable capacity spaces. For example, a bus may initially have 50 unreservable capacity spaces and 10 spaces designated as reservable. In some embodiments, such as when rideshare management server 150 has assigned a threshold number of requesting users to that bus (e.g. 75% reservation level of reservable capacity spaces), it may increase the number of reservable capacity spaces associated with the bus. In this example, after eight users are assigned to the 10 reservable capacity spaces (e.g., over 75% of the capacity), rideshare management server may re-designate a number of unreservable capacity spaces (e.g., a fixed number, a fixed percentage, a variable number, a variable percentage) as reservable capacity spaces, which may be based on a relative proportion of reservable capacity spaces to unreservable capacity spaces, a total capacity of a ridesharing vehicle, a route associated with a ridesharing vehicle, etc. As one example, ridesharing management server 150 may re-designate a linearly or exponentially decreasing number of unreservable capacity spaces as reservable capacity spaces when rideshare management server 150 has assigned a threshold number of requesting users to that bus (e.g., six reservable capacity spaces re-designated when a first threshold is reached, fourth reservable capacity spaces re-designated when a second threshold is reached, one reservable capacity space re-designated when a threshold is reached). As another example, ridesharing management server 150 may redesignate a number of unreservable capacity spaces as reservable capacity spaces for a bus when it has passed a particular bus stop or combination of bus stops and has a less than a threshold number of unreservable capacity spaces occupied (e.g., at which point it may be unlikely that the bus may encounter relatively high volumes of non-reservation passengers).

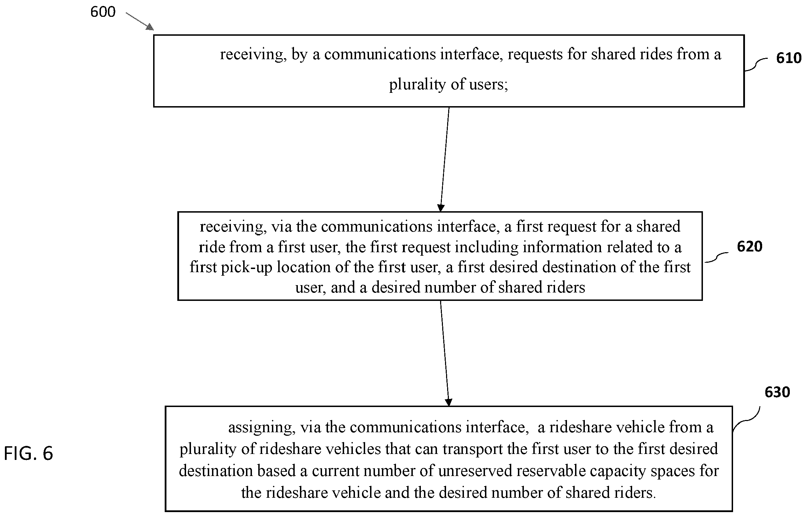

Fig. 6 is a flow diagram 600 for a method of managing a fleet of ridesharing vehicles. The method can involve receiving (e.g., via the ridesharing management server 150 as described above with respect to Fig. 1) requests for shared rides from a plurality of users (e.g., user 130A and/or second user 130B as described above in Fig. 1).

The first request can be transmitted from the first user via a corresponding user device (e.g., user device 120A as described above in Fig. 1A.) The first request can include information related to a first pick-up location of the first user, a first desired destination of the first user, and a desired number of shared riders (Step 610). The desired number of shared riders can indicate how many riders the first user prefers to ride with. The desired number of shared riders can be a maximum number of shared riders, a minimum number of shared riders and/or an exact number of shared riders. For example, a rider may only want to share the ride with one other person. In some embodiments, the rider may have a long ride and want to share the ride with another rider for the sake of cost or company.

The first request can include a number of seats in the vehicles. The number of seats in the vehicle can be a maximum number of seats for the vehicle, a minimum number of seats for the vehicle or an exact number of seats for the vehicle.

In some embodiments, a rider can specify that they want a vehicle with a minimum of five seats in the vehicle and a desired number of shared riders of two. In this manner, the rider can ensure that even though they are sharing the vehicle, they may not need to sit abutting another rider. In another embodiment, a rider may want to limit the number of riders to two so that they can be guaranteed to have a window seat. In another embodiments, a rider may want to maximize the number of riders in the vehicle to obtain he least expensive ride option.

The first request can include a vehicle type. For example, the vehicle type can be a sedan, van, bus, truck, or any vehicle type.

The method can also involve assigning (e.g., via the ridesharing management server 150 as described above with respect to Fig. 1) a rideshare vehicle from a plurality of rideshare vehicles that can transport the first user to the first desired destination based a current number of unreserved reservable capacity spaces for the rideshare vehicle and the desired number of shared riders (Step 620).

The rideshare vehicle selected can be one that has a number of unreserved reservable capacity spaces that allow the first user to enter the vehicle and one that when all of the reservable capacity spaces for the vehicle are reserved, the desired number of shared riders is met. For example, a first user can request a ride where the desired number of shared riders in the vehicle is not to exceed two. Assume there are two rideshare vehicles available each with no passengers, one that has two unreserved reservable capacity spaces and one that has three unreserved reservable capacity spaces. In this example, to meet the criteria that the desired number of shared riders in the vehicle is not to exceed two, the first rideshare vehicle can be assigned to the first user.

In some embodiments, the first user is assigned to any rideshare vehicle that has a number of unreserved reservable capacity spaces that allow the first user to enter and meets the desired number of shared riders criteria, and the underserved reservable capacity is modified in real-time to ensure the desired number of shared riders criteria is not exceeded. For example, a first user can request a ride where the desired number of shared riders in the vehicle is not to exceed two. Assume there is only one rideshare vehicle available with no passengers that has three unreserved reservable capacity spaces. The first user can be assigned to the rideshare vehicle and the number of unreserved reservable capacity spaces can be reduced to one instead of two once the passenger enters to meet the desired number of shared riders in the vehicle criteria.

In some embodiments, a number of passengers in the vehicle is entered by a driver into a driver interface. In various embodiments, a number of passengers in the vehicle is automatically determined by a passenger tracking device tracking passengers entering and exiting the vehicle. A passenger tracking device can include a motion sensor, an infrared sensor, a weight sensor, an accelerometer, or a device configured to accept tactile input from a passenger (e.g., a ticket-punching device, a networked touch-screen device, etc.). Any of these sensors or devices may be configured (e.g., positioned) to detect a passenger who is entering a ridesharing vehicle, is within a ridesharing vehicle, and/or is departing a ridesharing vehicle.

In some embodiments, a passenger that enters the vehicle is identified as a reservation user using location data from a user communication device. For example, when a ridesharing management server (e.g., ridesharing management server 150 as described above in FIG. 1) determines that a user communication device is within a predetermined threshold distance of a driver communication device and/or a ridesharing vehicle, ridesharing management server can determine that a user associated with that user communication device has entered the ridesharing vehicle. In some embodiments, a number of remaining unreserved reservable capacity spaces is based on a number of passenger departures of reservation users from a ridesharing vehicle. For example, ridesharing management server can determine a number of passenger departures of reservation users from a ridesharing vehicle based on location data from user communication devices of reservation users.

In some embodiments, ridesharing management server calculates a number of unoccupied unreservable capacity spaces of a ridesharing vehicle. For example, ridesharing management server can subtract a number of entrants to the first ridesharing vehicle and a total number of users assigned to the first ridesharing vehicle from a total capacity of the first ridesharing vehicle. In some embodiments, the number of unoccupied unreservable capacity spaces is determined based on an assignment of a user to a ridesharing vehicle. In some embodiments, a number of unoccupied unreservable capacity spaces of a ridesharing vehicle is based on a number of passenger departures from the ridesharing vehicle.

In various embodiments, ridesharing management server determines a number of occupied unreservable capacity spaces of a ridesharing vehicle, a number of reserved reservable capacity spaces of a ridesharing vehicle, and/or a number of unreserved reservable capacity spaces of a ridesharing vehicle (e.g., using the principles described above with respect to determining a number of unoccupied unreservable capacity spaces of a ride sharing vehicle). In some embodiments, ridesharing management server determines a number of unreserved reservable capacity spaces and a number of unoccupied unreservable capacity spaces as follows:
- Number of unreserved reservable capacity spaces= number ofreservable capacity spaces - number of assigned users + number of reservation users who have entered and departed from the ridesharing vehicle; and
- Number of unoccupied unreservable capacity spaces= number of unreservable capacity spaces - number of non-reservation users who have entered the ridesharing vehicle+ number of non-reservation users who have departed from the ridesharing vehicle

In some embodiments, ridesharing management server determines that a number of unoccupied unreservable capacity spaces of the first ridesharing vehicle is below a threshold ( exemplary thresholds are discussed above). In response to such a determination, ridesharing management server can modify a current route of the first ridesharing vehicle and/or transmit a modified current route to a driver communication device.

In some embodiments, ridesharing management server 150 may predict additional information and transmit it to a driver communication device. For example, ridesharing management server can determine a predicted number of non-reservation users who will enter a ride-sharing vehicle at a subsequent stop based on historical data, user device location data, weather data (e.g., creating derived data of crowd behavior from weather data), and the like. This information can be used by ridesharing management server to provide further predications to a driver (e.g., "Two reservation users will board at your next stop, which is usually busy. Please do not allow more than 10 non-reservation customers to board, to prevent overcrowding."). Predictions can be generated according to a computer model implemented at ridesharing management server.

In some embodiments, the ridesharing management server transmits a number of unoccupied unreservable capacity spaces of the ridesharing vehicle to a driver communication device (e.g., driver communication device 120 as described above in FIG. 1). In some embodiments, the ridesharing management server transmits a number of occupied unreservable capacity spaces of a ridesharing vehicle, a number of reserved reservable capacity spaces of a ridesharing vehicle, and/or a number of unreserved reservable capacity spaces of a ridesharing vehicle. In some embodiments, a driver communication device 120 displays a number as a limit on the number of nonreservation passengers the ridesharing vehicle (e.g., bus) may pick up for the remainder of its route, until a particular stop, based on the current occupants in the vehicle.

In some embodiments, ridesharing management server stores a number of occupied unreservable capacity spaces of a ridesharing vehicle, a number of reserved reservable capacity spaces of a ridesharing vehicle, and/or a number of unreserved reservable capacity spaces of a ridesharing vehicle. In some embodiments, information is stored at a database (e.g., database 170). For example, a determined number of remaining unoccupied unreservable capacity spaces of the first ridesharing vehicle and a determined number of remaining unreserved reservable capacity spaces of the first ridesharing vehicle can be stored at a database.

One skilled in the art will realize the invention can be embodied in other specific forms without departing from the spirit or essential characteristics thereof. The foregoing embodiments are therefore to be considered in all respects illustrative rather than limiting of the invention described herein. Scope of the invention is thus indicated by the appended claims, rather than by the foregoing description, and all changes that come within the meaning and range of equivalency of the claims are therefore intended to be embraced therein.

In the foregoing detailed description, numerous specific details are set forth in order to provide an understanding of the invention. However, it will be understood by those skilled in the art that the invention can be practiced without these specific details. In other instances, well-known methods, procedures, and components, modules, units and/or circuits have not been described in detail so as not to obscure the invention. Some features or elements described with respect to one embodiment can be combined with features or elements described with respect to other embodiments.

Although embodiments of the invention are not limited in this regard, discussions utilizing terms such as, for example, "processing," "computing," "calculating," "determining," "establishing", "analyzing", "checking", or the like, can refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that can store instructions to perform operations and/or processes.

Although embodiments of the invention are not limited in this regard, the terms "plurality" and "a plurality" as used herein can include, for example, "multiple" or "two or more". The terms "plurality" or "a plurality" can be used throughout the specification to describe two or more components, devices, elements, units, parameters, or the like. The term set when used herein can include one or more items. Unless explicitly stated, the method embodiments described herein are not constrained to a particular order or sequence. Some of the described method embodiments or elements thereof can occur or be performed simultaneously, at the same point in time, or concurrently.

A computer program can be written in any form of programming language, including compiled and/or interpreted languages, and the computer program can be deployed in any form, including as a stand-alone program or as a subroutine, element, and/or other unit suitable for use in a computing environment. A computer program can be deployed to be executed on one computer or on multiple computers at one site.

Method steps can be performed by one or more programmable processors executing a computer program to perform functions of the invention by operating on input data and generating output. Method steps can also be performed by an apparatus and can be implemented as special purpose logic circuitry. The circuitry can, for example, be a FPGA (field programmable gate array) and/or an ASIC (application-specific integrated circuit). Modules, subroutines, and software agents can refer to portions of the computer program, the processor, the special circuitry, software, and/or hardware that implement that functionality.

Processors suitable for the execution of a computer program include, by way of example, both general and special purpose microprocessors, and any one or more processors of any kind of digital computer. Generally, a processor receives instructions and data from a read-only memory or a random access memory or both. The essential elements of a computer are a processor for executing instructions and one or more memory devices for storing instructions and data. Generally, a computer can be operatively coupled to receive data from and/or transfer data to one or more mass storage devices for storing data (e.g., magnetic, magneto-optical disks, or optical disks).

Data transmission and instructions can also occur over a communications network. Information carriers suitable for embodying computer program instructions and data include all forms of non-volatile memory, including by way of example semiconductor memory devices. The information carriers can, for example, be EPROM, EEPROM, flash memory devices, magnetic disks, internal hard disks, removable disks, magneto-optical disks, CD-ROM, and/or DVD-ROM disks. The processor and the memory can be supplemented by, and/or incorporated in special purpose logic circuitry.

To provide for interaction with a user, the above-described techniques can be implemented on a computer having a display device, a transmitting device, and/or a computing device. The display device can be, for example, a cathode ray tube (CRT) and/or a liquid crystal display (LCD) monitor. The interaction with a user can be, for example, a display of information to the user and a keyboard and a pointing device (e.g., a mouse or a trackball) by which the user can provide input to the computer (e.g., interact with a user interface element). Other kinds of devices can be used to provide for interaction with a user. Other devices can be, for example, feedback provided to the user in any form of sensory feedback (e.g., visual feedback, auditory feedback, or tactile feedback). Input from the user can be, for example, received in any form, including acoustic, speech, and/or tactile input.

The computing device can include, for example, a computer, a computer with a browser device, a telephone, an IP phone, a mobile device (e.g., cellular phone, personal digital assistant (PDA) device, laptop computer, electronic mail device), and/or other communication devices. The computing device can be, for example, one or more computer servers. The computer servers can be, for example, part of a server farm. The browser device includes, for example, a computer (e.g., desktop computer, laptop computer, and tablet) with a World Wide Web browser (e.g., Microsoft^{®} Internet Explorer^{®} available from Microsoft Corporation, Chrome available from Google, Mozilla^{®} Firefox available from Mozilla Corporation, Safari available from Apple). The mobile computing device includes, for example, a personal digital assistant (PDA).

Website and/or web pages can be provided, for example, through a network (e.g., Internet) using a web server. The web server can be, for example, a computer with a server module (e.g., Microsoft^{®} Internet Information Services available from Microsoft Corporation, Apache Web Server available from Apache Software Foundation, Apache Tomcat Web Server available from Apache Software Foundation).

The storage module can be, for example, a random access memory (RAM) module, a read only memory (ROM) module, a computer hard drive, a memory card (e.g., universal serial bus (USB) flash drive, a secure digital (SD) flash card), a floppy disk, and/or any other data storage device. Information stored on a storage module can be maintained, for example, in a database (e.g., relational database system, flat database system) and/or any other logical information storage mechanism.

The above-described techniques can be implemented in a distributed computing system that includes a back-end component. The back-end component can, for example, be a data server, a middleware component, and/or an application server. The above described techniques can be implemented in a distributing computing system that includes a front-end component. The front-end component can, for example, be a client computer having a graphical user interface, a Web browser through which a user can interact with an example implementation, and/or other graphical user interfaces for a transmitting device. The components of the system can be interconnected by any form or medium of digital data communication (e.g., a communication network). Examples of communication networks include a local area network (LAN), a wide area network (WAN), the Internet, wired networks, and/or wireless networks.

The system can include clients and servers. A client and a server are generally remote from each other and typically interact through a communication network. The relationship of client and server arises by virtue of computer programs running on the respective computers and having a client-server relationship to each other.

The above described networks can be implemented in a packet-based network, a circuit-based network, and/or a combination of a packet-based network and a circuit-based network. Packet-based networks can include, for example, the Internet, a carrier internet protocol (IP) network (e.g., local area network (LAN), wide area network (WAN), campus area network (CAN), metropolitan area network (MAN), home area network (HAN), a private IP network, an IP private branch exchange (IPBX), a wireless network (e.g., radio access network (RAN), 802.11 network, 802.16 network, general packet radio service (GPRS) network, HiperLAN), and/or other packet-based networks. Circuit-based networks can include, for example, the public switched telephone network (PSTN), a private branch exchange (PBX), a wireless network (e.g., RAN, Bluetooth^{®}, code-division multiple access (CDMA) network, time division multiple access (TDMA) network, global system for mobile communications (GSM) network), and/or other circuit-based networks.

Some embodiments of the present invention may be embodied in the form of a system, a method or a computer program product. Similarly, some embodiments may be embodied as hardware, software or a combination of both. Some embodiments may be embodied as a computer program product saved on one or more non-transitory computer readable medium (or media) in the form of computer readable program code embodied thereon. Such non-transitory computer readable medium may include instructions that when executed cause a processor to execute method steps in accordance with embodiments. In some embodiments the instructions stores on the computer readable medium may be in the form of an installed application and in the form of an installation package.

Such instructions may be, for example, loaded by one or more processors and get executed. For example, the computer readable medium may be a non-transitory computer readable storage medium. A non-transitory computer readable storage medium may be, for example, an electronic, optical, magnetic, electromagnetic, infrared, or semiconductor system, apparatus, or device, or any combination thereof.

Computer program code may be written in any suitable programming language. The program code may execute on a single computer system, or on a plurality of computer systems.

One skilled in the art will realize the invention may be embodied in other specific forms without departing from the spirit or essential characteristics thereof. The foregoing embodiments are therefore to be considered in all respects illustrative rather than limiting of the invention described herein. Scope of the invention is thus indicated by the appended claims, rather than by the foregoing description, and all changes that come within the meaning and range of equivalency of the claims are therefore intended to be embraced therein.

In the foregoing detailed description, numerous specific details are set forth in order to provide an understanding of the invention. However, it will be understood by those skilled in the art that the invention can be practiced without these specific details. In other instances, well-known methods, procedures, and components, modules, units and/or circuits have not been described in detail so as not to obscure the invention. Some features or elements described with respect to one embodiment can be combined with features or elements described with respect to other embodiments.

The description also includes the subject matter of the following clauses:

### CLAUSES

1. A system for managing a fleet of ridesharing vehicles, the system comprising:
   a communications interface configured to receive requests for shared rides from a plurality of users;
   at least one processor configured to:
      receive, via the communications interface, a first request for a shared ride from a first user, the first request including information related to a first pick-up location of the first user, a first desired destination of the first user, and a desired number of shared riders; and
      assign a rideshare vehicle from a plurality of rideshare vehicles that can transport the first user to the first desired destination based a current number of unreserved reservable capacity spaces for the rideshare vehicle and the desired number of shared riders.
2. The system of clause 1 wherein the desired number of shared riders is based on input of the first user, input of the driver, received by the at least one processor or any combination thereof.
3. The system of clause 1 wherein desired number of shared riders is a maximum number of shared riders.
4. The system of clause 1 wherein the desired number of shared riders is a minimum number of shared riders.
5. The system of clause 1 wherein assigning the rideshare vehicle is further based on a desired number of shared riders of a current passenger in the rideshare vehicle.
6. The system of clause 1 wherein assigning the rideshare vehicle is further based on a location the first user and the respective rideshare vehicle.
7. The system of clause 1 wherein the first pick-up location is within a predefined distance of the first user.
8. The system of clause 1 wherein the at least one processor is further configured to:
   transmit an estimated pick-up time and pick-up location to a communication device of the first user.
9. The system of clause 1 wherein estimated pick-up time is based on traffic conditions.
10. The system of clause 1 wherein the at least one processor is further configured to transmit a number of unoccupied unreserved capacity spaces of the ride sharing vehicle to a driver communication device of the ride sharing vehicle.
11. A method for managing a fleet of ridesharing vehicles, the method comprising:
   receiving, by a communications interface, requests for shared rides from a plurality of users;
   receiving, via the communications interface, a first request for a shared ride from a first user, the first request including information related to a first pick-up location of the first user, a first desired destination of the first user, and a desired number of shared riders; and
   assigning, via the communications interface, a rideshare vehicle from a plurality of rideshare vehicles that can transport the first user to the first desired destination based a current number of unreserved reservable capacity spaces for the rideshare vehicle and the desired number of shared riders.
12. The method of clause 11 wherein the desired number of shared riders is based on input of the first user, input of the driver, received by the at least one processor or any combination thereof.
13. The method of clause 11 wherein desired number of shared riders is a maximum number of shared riders.
14. The method of clause 11 wherein the desired number of shared riders is a minimum number of shared riders.
15. The method of clause 11 wherein assigning the rideshare vehicle is further based on a desired number of shared riders of a current passenger in the rideshare vehicle.
16. The method of clause 11, wherein assigning the rideshare vehicle is further based on a location the first user and the respective rideshare vehicle.
17. The method of clause 11 wherein the first pick-up location is within a predefined distance of the first user.
18. The method of clause 11 further comprising transmitting an estimated pick-up time and pick-up location to a communication device of the first user.
19. The method of clause 11 wherein estimated pick-up time is based on traffic conditions.
20. The method of clause 11 further comprising transmitting a number of unoccupied unreserved capacity spaces of the ride sharing vehicle to a driver communication device of the ride sharing vehicle.

## Claims

1. A system for managing a fleet of ridesharing vehicles, the system comprising:
a communications interface configured to receive requests for shared rides from a plurality of users;
at least one processor configured to:
receive, via the communications interface, a first request for a shared ride from a first user, the first request including information related to a first pick-up location of the first user, a first desired destination of the first user, and a desired number of shared riders; and
assign a rideshare vehicle from a plurality of rideshare vehicles that can transport the first user to the first desired destination based a current number of unreserved reservable capacity spaces for the rideshare vehicle and the desired number of shared riders.

2. The system of claim 1 wherein the desired number of shared riders is at least one of:
a) based on input of the first user, input of the driver, received by the at least one processor or any combination thereof;
b) a maximum number of shared riders; or
c) a minimum number of shared riders.

3. The system of claim 1 or claim 2, wherein assigning the rideshare vehicle is further based on a desired number of shared riders of a current passenger in the rideshare vehicle.

4. The system of any of claims 1 to 3, wherein assigning the rideshare vehicle is further based on a location the first user and the respective rideshare vehicle.

5. The system of any of claims 1 to 4 wherein the first pick-up location is within a predefined distance of the first user.

6. The system of any of claims 1 to 5, wherein the at least one processor is further configured to:
transmit an estimated pick-up time and pick-up location to a communication device of the first user.

7. The system of any of claims 1 to 6, wherein estimated pick-up time is based on traffic conditions.

8. The system of any of claims 1 to 7, wherein the at least one processor is further configured to transmit a number of unoccupied unreserved capacity spaces of the ride sharing vehicle to a driver communication device of the ride sharing vehicle.

9. A method for managing a fleet of ridesharing vehicles, the method comprising:
receiving, by a communications interface, requests for shared rides from a plurality of users;
receiving, via the communications interface, a first request for a shared ride from a first user, the first request including information related to a first pick-up location of the first user, a first desired destination of the first user, and a desired number of shared riders; and
assigning, via the communications interface, a rideshare vehicle from a plurality of rideshare vehicles that can transport the first user to the first desired destination based a current number of unreserved reservable capacity spaces for the rideshare vehicle and the desired number of shared riders.

10. The method of claim 9, wherein the desired number of shared riders is at least one of:
a) based on input of the first user, input of the driver, received by the at least one processor or any combination thereof;
b) a maximum number of shared riders; or
c) a minimum number of shared riders.

11. The method of claim 1 or 2, wherein assigning the rideshare vehicle is further based on:
a) a desired number of shared riders of a current passenger in the rideshare vehicle; or
b) a location the first user and the respective rideshare vehicle.

12. The method of any of claims 9 to 11, wherein the first pick-up location is within a predefined distance of the first user.

13. The method of any of claims 9 to 12, further comprising transmitting an estimated pick-up time and pick-up location to a communication device of the first user.

14. The method of any of claims 9 to 13, wherein estimated pick-up time is based on traffic conditions.

15. The method of any of claims 9 to 14, further comprising transmitting a number of unoccupied unreserved capacity spaces of the ride sharing vehicle to a driver communication device of the ride sharing vehicle.
